# EUROPEAN PATENT APPLICATION

(11) **EP 4 826 121 A1**
(43) Date of publication of application: **21.10.2026**
(21) Application number: 24904357.1
(22) Date of filing: 11.12.2024
(51) Int. Cl.: C23C 22/00, C23C 2/26, C23C 2/06, C23C 2/12, C25D 3/22, C09D 1/00, C09D 7/63

(54) **COMPOSITION FOR SURFACE TREATING STEEL SHEET, PLATED STEEL SHEET SURFACE TREATED USING SAME, MANUFACTURING METHOD THEREFOR, AND HOT PRESS-FORMED MEMBER**

(30) Priority: 15.12.2023 KR 20230183077
(71) Applicant: POSCO Co., Ltd, Gyeongsangbuk-do 37859 (KR)
(72) Inventor: KIM, Yeon-Ho, Gwangyang-si, Jeollanam-do 57807 (KR); LEE, Kang-Min, Gwangyang-si, Jeollanam-do 57807 (KR)
(74) Representative: Meissner Bolte Partnerschaft mbB
(86) International application number: PCT/KR2024/096652
(87) International publication number: WO 2025/127792

(57) **Abstract**

The present invention relates to a surface-treated steel sheet suitable as a material for an automotive sheet material and, more specifically, to a composition for surface treatment of a plated steel sheet, a plated steel sheet surface-treated with the composition, a manufacturing method therefor, and a hot press-formed member.

## Description

### Technical Field

The present disclosure relates to a surface-treated steel sheet suitable as a material for an automotive panel material and more particularly, to a composition for a surface treated plated steel sheet, a plated steel sheet surface treated using the composition, a manufacturing method therefor, and a hot press-formed member.

### Background Art

Typically, zinc-plated steel sheets are used as a material for an automotive sheet material. Due to low cost thereof, excellent corrosion resistance (including pitting corrosion resistance), and attractive surface appearance, the use of zinc-plated steel sheets for automotive interior and exterior panels has been gradually increasing.

The steel sheet used as the automotive panel material is subjected to assembly processes such as welding and bonding after press forming during the automobile manufacturing process, and are then subjected to degreasing, phosphate treatment, and painting processes. Accordingly, the zinc-plated steel sheets applied as the automotive panel materials are required to have properties such as lubricity, weldability, adhesion, film removability, and paintability.

Meanwhile, for plated steel sheets having a zinc-based plating layer, the required properties differ depending on the type of plating, and it is necessary to compensate for properties that are relatively inferior.

As one example, hot-dip galvanized steel sheets (GI) and electro-galvanized steel sheets (EG) have a problem in that the plating layer is detached and adhered to a bead portion of a die, etc., during press forming, which involves high pressure and high-speed friction, due to a soft plating layer. As a result, defects such as scratches or dents occur on a surface of a steel sheet.

As another example, alloyed hot-dip galvanized steel sheets (GA) have a high surface friction coefficient, and due to poor lubrication properties during press forming, there is a problem in that the material itself may fracture or a powdering phenomenon may occur in which the relatively brittle plating layer is detached.

In order to solve such friction problems, post-treatment processes are performed on the surface of the zinc-plated steel sheet and the zinc-based alloy-plated steel sheet used as the automotive panel material.

Related technologies may include a technique (Patent Documents 1 and 2) for forming a phosphate film on the surface of the zinc plating layer, and a technique (Patent Documents 3 and 4) for forming a metal oxide layer. However, these technologies involve complex processes and have limitations in terms of a type of zinc-based plated steel sheets to which these technologies can be applied.

Among these, Patent Documents 1 and 2 require processes such as surface adjustment, phosphate treatment, rinsing, and drying, and have disadvantages in that they require a considerable amount of facility space and solution management in actual operation. In addition, since the treatment method depends on the reactivity with the plating layer, it is also cumbersome in that the composition of the solution must be changed depending on the type of zinc-plated steel sheet.

Patent Documents 3 and 4 have a limitation in that they cannot be applied to all zinc-plated steel sheets because they are restricted by the compositional components (metal components) of the plating layer.

Therefore, there is a need for a method capable of performing post-treatment (surface treatment) of zinc-based plated steel sheets without undergoing multiple processes, while effectively improving lubricity (frictional properties) of various zinc-based plated steel sheets.

Furthermore, in recent years, automobile manufacturers have been continuously conducting research on vehicle body weight reduction in order to improve fuel efficiency of automobiles and achieve CO₂ emission regulations. As part of this effort, the hot press-forming method has been proposed so as to enhance the strength of steel material while maintaining the same weight. The hot press-forming method is a process in which a steel material having a predetermined strength is processed in an austenite single-phase region, and the processed steel is then rapidly cooled to a low temperature, thereby forming a low-temperature structure such as martensite within the steel material. According to this method, the strength of a product may be dramatically improved, thereby minimizing the problem of deterioration in workability during the manufacturing of high-strength (ultra-high-strength) members.

Meanwhile, as efforts to achieve carbon neutrality continue on a nationwide scale, automobile manufacturers and steel companies have been jointly conducting various studies on technologies capable of reducing the amount of CO₂ generated during hot press-forming.

To achieve this, a technology has been proposed to shorten the heating time required to reach a target temperature during high-temperature heating for hot press-forming, and as a related technology, Patent Document 5 discloses a method of coating a polymer on a surface of a steel sheet. In this manner, when a hydrocarbon-based polymer is coated on the surface of the steel sheet, an effect of increasing a heating rate during hot press-forming may be obtained; however, when the coated steel sheet is subjected to hot press-forming, residues may be generated on the surface after forming, which may cause problems such as deterioration in weldability.

Accordingly, there is a need for a method capable of improving a heating rate during hot press-forming without deteriorating physical properties, even when a steel sheet (plated steel sheet) suitable for hot press-forming is surface-treated.
(Patent Document 1) Korean Patent Laid-Open Publication No. 2001-0074527
(Patent Document 2) Japanese Patent Laid-Open Publication No. 2003-206106
(Patent Document 3) Japanese Patent Laid-Open Publication No. 1990-190483
(Patent Document 4) Japanese Patent Laid-Open Publication No. 2014-185381
(Patent Document 5) Chinese Patent Laid-Open Publication No. 10616418

### Summary of Invention

### Technical Problem

An aspect of the present disclosure is to provide a composition for a surface treated plated steel sheet, which not only improves lubricity of a zinc-based plated steel sheet subjected to surface treatment, but also shortens a heating time required to reach a target temperature during high-temperature heating for hot press-forming the surface-treated plated steel sheet.

Another aspect of the present disclosure is to provide a plated steel sheet surface treated using a composition for surface treatment, and a manufacturing method therefor.

Still another aspect of the present disclosure is to provide a hot press-formed member obtained by hot press-forming a surface-treated plated steel sheet.

Objects of the present disclosure are not limited to the above-mentioned objects. That is, other objects that are not mentioned may be obviously understood by those skilled in the art to which the present disclosure pertains from the following description.

### Solution to Problem

According to an aspect of the present disclosure, a composition for a surface treating steel sheet includes: an inorganic compound, an organic compound, and the balance being a solvent, in which the organic compound is a fatty acid-based organic compound or a dicarboxylic acid-based organic compound having a molecular weight of 1,000 or less.

The organic compound may be included in an amount of 0.15 to 7.50 wt% based on 100 wt% of a total solid content of the composition.

By including the organic compound, in particular, a fatty acid-based organic compound, as the composition for a surface treating steel sheet, lubricity of the surface-treated steel sheet (in particular, a plated steel sheet) may be improved.

The inorganic compound may be one or more selected from the group consisting of phosphorus (P), boron (B), and zirconium (Zr), and may further include one or more selected from the group consisting of nickel (Ni), manganese (Mn), molybdenum (Mo), zinc (Zn), and silicon (Si).

According to another aspect of the present disclosure, a surface-treated zinc or aluminum-based plated steel sheet includes: a base steel sheet; a zinc or aluminum-based plating layer formed on at least one surface of the base steel sheet; and a surface-treated film layer formed on the zinc or aluminum-based plating layer.

The surface-treated film layer formed on the zinc or aluminum-based plating layer may be formed of the composition according to an embodiment of the present disclosure.

The surface-treated film layer may be composed of two layers, an upper layer and a lower layer, and a carbon (C) distribution of the upper layer and the lower layer may satisfy the following Relational Equation 1. [Relational Equation 1] 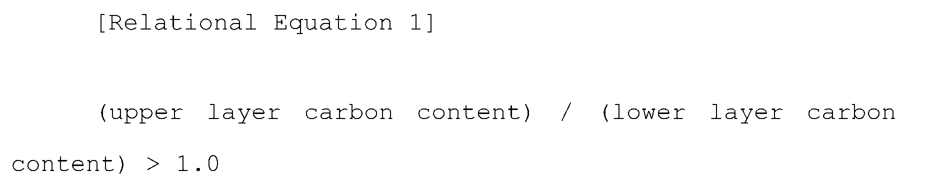 (upper layer carbon content) / (lower layer carbon content) > 1.0

The surface-treated zinc or aluminum-based plated steel sheet may have a surface-treated film layer including an organic compound, and by obtaining a content distribution of the organic compound in the surface-treated film layer in a thickness (depth) direction, lubricity may be improved.

The surface-treated film layer formed on the zinc or aluminum-based plating layer may have a thickness of 0.1 to 1.0 µm.

According to still another aspect of the present disclosure, a manufacturing method for a surface-treated plated steel sheet includes: preparing a plated steel sheet having a zinc or aluminum-based plating layer formed on at least one surface of a base steel sheet; coating a composition for surface treatment on the plating layer; and drying the plated steel sheet coated with the composition for surface treatment to form a surface-treated film layer.

The coating of the composition for surface treatment on the plating layer may be performed using the solution composition according to an embodiment of the present disclosure.

The coating of the composition for surface treatment may be performed at an adhesion amount of 100 to 1000 mg/m².

The drying operation after the coating can be performed at a temperature range of 70 to 150°C based on a PMT of the plated steel sheet.

According to yet another aspect of the present disclosure, a hot press-formed member includes: a base steel sheet; an aluminum-based plating layer formed on at least one surface of the base steel sheet; and a surface-treated film layer formed on the aluminum-based plating layer.

### Advantageous Effects of Invention

According to an aspect of the present disclosure, it is possible to provide a composition for a surface treating steel sheet composed of an inorganic compound and an organic compound. Since the composition allows coating to be performed by a simple coating method, it is possible to provide an economic effect by reducing process costs.

Furthermore, when a zinc or aluminum-based plated steel sheet is surface treated using the composition provided by the present disclosure, it is possible to improve lubricity of the surface-treated zinc or aluminum-based plated steel sheet, thereby significantly enhancing cold or hot press formability.

In particular, under conditions involving high press loads, such as when processing the surface-treated zinc or aluminum-based plated steel sheet into parts having complex shapes or severe drawing operations, or during cold forming of high-strength steel materials, it is possible to prevent cracking of the steel sheet and enhance formability.

Moreover, even when the plated steel sheet for hot press-forming is surface treated using the composition provided by the present disclosure, it is possible to improve formability during blanking operations for processing into specific automotive parts. In particular, when manufacturing parts or the like from a surface-treated plated steel sheet for hot press-forming, there are economically and environmentally advantageous effects, such as the ability to shorten a heating time during high-temperature heating for hot press-forming.

### Brief Description of Drawings

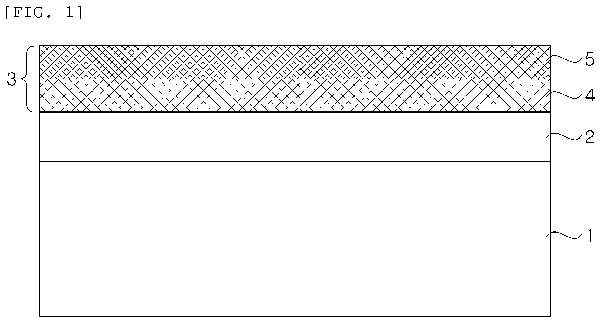

FIG. 1 schematically illustrates a cross-sectional shape of a surface-treated steel sheet according to an embodiment of the present disclosure.
FIG. 2 illustrates a side view of a test specimen for measuring adhesive strength according to an embodiment of the present disclosure.

### Best Mode for Invention

Hereinafter, example embodiments of the present disclosure will be described with reference to the accompanying drawings. However, example embodiments of the present disclosure may be modified in several other forms, and the scope of the present disclosure is not limited to example embodiments to be described below.

The present disclosure provides a composition capable of surface treating a steel sheet, a plated steel sheet surface treated using the composition, and a manufacturing method therefor. The present disclosure will be described in detail below.

The inventors of the present disclosure recognized problems arising from insufficient lubricating properties when zinc-based plated steel sheets are used as a material for an automotive panel material, and conducted extensive studies to solve these problems.

In addition, the inventors of the present disclosure conducted in-depth studies on a method for providing a plated steel sheet for hot press-forming that may satisfy physical properties required in an automotive field in which the plated steel sheet is applied, while reducing CO₂ generation during the hot press-forming process of the plated steel sheet. In particular, the inventors considered a method for increasing a heating rate during high-temperature heating for forming the plated steel sheet for hot press-forming.

As a result, it was confirmed that a composition for a surface treating steel sheet can be provided which, in the case of zinc-based plated steel sheets, not only significantly improves cold press formability by increasing lubricity, but also secures physical properties such as corrosion resistance and bendability required for a surface treatment layer of a plated steel sheet for hot press-forming, and reduces the time required to heat to a target temperature for high-temperature forming, thereby achieving improvements in productivity as well as a CO₂ reduction effect. Accordingly, the present disclosure was completed.

According to one aspect of the present disclosure, a composition for a surface treating steel sheet including an inorganic compound, an organic compound, and the balance being a solvent is provided. Each component constituting the composition will be described in detail below. In addition, the content of components in the film layer obtained by treatment with the composition is described. In this case, unless otherwise specified, the content of each component is based on 100 wt% of the total composition (solution composition) or 100 wt% within the film layer after drying.

### Inorganic Compound

When a surface-treated film layer is formed by coating (applying) a composition for surface treatment onto a plating layer of a plated steel sheet, it is necessary to improve an adhesion between the plating layer and a film layer. Accordingly, the composition for a surface treating steel sheet according to an embodiment of the present disclosure includes an inorganic compound.

The inorganic compound may be one or more selected from the group consisting of phosphorus (P), boron (B), and zirconium (Zr), and may further include one or more selected from the group consisting of nickel (Ni), manganese (Mn), molybdenum (Mo), zinc (Zn), and silicon (Si)

In an embodiment of the present disclosure, the inorganic compound may be one or more selected from materials consisting of acetates, carbonates, alkali salts, ammonium salts, or oxides and hydroxides of the above-described metals.

In an embodiment of the present disclosure, the content of the inorganic compound contained in the composition is not particularly limited. That is, it is preferable that the surface-treated plated steel sheet contains the surface-treated film layer at a level that prevents the film layer from detaching or peeling off during processing, forming, and the like of the surface-treated plated steel sheet, and maintains the film layer until the time of manufacturing into a final part. As one example, it may be included in an amount of 5 to 15 wt% based on 100 wt% of the total composition. In this case, the content here refers to a content within the solution composition.

### Organic Compound

The composition for a surface treating steel sheet according to an embodiment of the present disclosure may include organic compounds to obtain desired physical properties when surface treating the plated steel sheet.

In an embodiment of the present disclosure, the inorganic compound may exist as oxides with high hardness or as hydroxides with low resistance to shear force within the surface-treated film layer obtained by coating (applying) the composition, thereby contributing to lubricity. However, this is not at a level favorable for forming. Accordingly, the composition according to an embodiment of the present disclosure has technical significance in further including the organic compounds in addition to the above-described inorganic compounds.

As such, when processing for forming the plated steel sheet surface treated using a composition containing the inorganic compounds and the organic compounds, for example, when press forming (cold forming) a surface-treated zinc-based plated steel sheet using a die, significantly improved lubricity may be imparted to the plated steel sheet. This may prevent phenomena such as the detachment of the plating layer detaching or the fracture of the steel sheet material during press forming of the plated steel sheet. Furthermore, superior lubrication performance may be achieved under high-load press conditions applied when processing plated steel sheets of high-strength steel into parts.

In addition, when heating at high temperatures for hot press-forming of a surface-treated plated steel sheet for hot press-forming, for example, an aluminum-based plated steel sheet, using the above-described composition, the effect of shortening the time required to heat to the target temperature may be obtained due to the composition having a high heat of combustion. As one example, when the solution used for surface treatment contains a substance with a high heat of combustion, a surface heating rate accelerates due to the heat of combustion of the substance in the applied solution when heating at high temperatures in a furnace for the hot press-forming of the plated steel sheet. As a result, the effect of shortening the time required to heat to the target temperature may be obtained.

Thus, the main purpose of the present disclosure is to improve the lubrication characteristics of the surface-treated plated steel sheet and to reduce the heating time during the high-temperature heating of the surface-treated plated steel sheet for hot press-forming. To achieve this, it is preferable to include, as the organic compounds, monocarboxyl acid-based organic compounds such as fatty acid-based organic compounds or dicarboxyl acid-based organic compounds having carboxyl groups at both ends.

In an embodiment of the present disclosure, the organic compound is advantageous as long as it has a melting point of 50°C or higher, is in a solid phase at room temperature, and preferably has a molecular weight of 1000 or less since it is advantageous to have lower viscosity in the molten state. When the molecular weight exceeds 1000 and the viscosity in the molten state is high (sticky), there is a risk of contaminating equipment in the production process and the parts processing process.

In an embodiment of the present disclosure, the organic compound may be a fatty acid-based organic compound such as a fatty acid-based compound, a fatty acid-based salt, or a fatty acid-based amide, and may be a dicarboxyl acid-based compound, a dicarboxyl acid-based salt, etc.

As a non-limiting example, the fatty acid-based organic compound may be one or more selected from the group consisting of stearic acid, 12-hydroxy stearic acid, 12-oxo stearic acid, palmitic acid, and oleic acid. Additionally, the fatty acid-based salt may be sodium stearate, sodium laurate, sodium oleate, etc., and the fatty acid-based amide may be stearamide. In addition, the dicarboxylic acid-based may be one or more selected from the group consisting of adipic acid, pimelic acid, suberic acid, azelaic acid, sebacic acid, undecanedioic acid, and dodecanedioic acid, and the dicarboxylic acid-based salt may be one or more selected from the group consisting of disodium adipate, diammonium adipate, disodium decanedioate, and diammonium decanedioate.

Meanwhile, the fatty acid-based organic compound may further include an ether of a fatty acid and polyoxyethylene(n), an ester of a fatty acid and polyoxyethylene(n), or a fatty acid ester. As a non-limiting example, the ether of the fatty acid and polyoxyethylene(n) may be a polyoxyethylene(n) stearyl ether in which n is 10 or less, and the ester of the fatty acid and polyoxyethylene(n) may be a polyoxyethylene(n) stearate in which n is 10 or less. In addition, the fatty acid ester may be one or more of ethylene glycol monostearate, sorbitan monostearate, and glycerol monostearate.

In an embodiment of the present disclosure, the organic compound may be included in an amount of 0.15 to 7.50 wt% based on 100 wt% of a total composition. In terms of improving the lubricity and combustion heat of the surface-treated plated steel sheet, a higher content of the organic compound is advantageous in terms of improving the heat of combustion.

The content of the organic compound present in the surface-treated film layer (dry film layer) obtained by surface treatment with the composition according to an embodiment of the present disclosure is important, and it may be present in an amount of 2 to 50% based on 100 wt% of the film layer. When the content of the organic compound in the film layer is 2% or more, the effect of adding the organic compound may be obtained. However, when the content exceeds 50%, the resistance to shear is excessively lowered, which significantly impairs sealer adhesion and may cause other problems such as equipment contamination. In another embodiment of the present disclosure, the organic compound may be included in an amount of 2 to 30% based on 100 wt% of the film layer, and in still another embodiment, it may be included in an amount of 5 to 20%.

Meanwhile, when the organic compound contained in the composition for a surface treating steel sheet according to an embodiment of the present disclosure is a sparingly soluble substance, or when dispersibility in a solution is low under conditions in which it is contained in a high amount, an additive such as an emulsifier may be further included. This is to ensure that the organic compound is sufficiently dispersed in a solvent such as water when the composition is prepared as a solution composition for coating treatment. In this case, the emulsifier may be appropriately selected and added in a certain amount depending on the type and addition amount of organic compounds.

Meanwhile, the composition for a surface treating steel sheet according to an embodiment of the present disclosure is a solution composition, and the solvent used therein is not particularly limited but may be water. In this case, water may be distilled water or deionized water. When prepared as a solution composition in this manner, it may be prepared by adding the inorganic compound and the organic compound to the solvent as described above, and then dissolving the inorganic compound and the organic compound. In an embodiment of the present disclosure, the solid content of the solution composition may be 8 to 15 wt%.

Hereinafter, the plated steel sheet according to another aspect of the present disclosure, specifically the surface-treated zinc-based plated steel sheet and the surface-treated plated steel sheet for hot press-forming, will be described in detail.

The surface-treated zinc-based plated steel sheet according to one aspect of the present disclosure may include a base steel sheet; a zinc-based plating layer formed on at least one surface of the steel sheet; and a surface-treated film layer formed on a plating layer.

The surface-treated plated steel sheet for hot press-forming according to another aspect of the present disclosure may include a base steel sheet; an aluminum-based plating layer formed on at least one surface of the steel sheet; and a surface-treated film layer formed on a plating layer.

In an embodiment of the present disclosure, the base steel sheet may be any steel sheet capable of obtaining the plated steel sheet through plating treatment, and its type and alloy composition are not specifically limited. In this case, the plated steel sheet corresponds to both a zinc-based plated steel sheet and an aluminum-based plated steel sheet having an aluminum-based plating layer.

As a non-limiting example, the base steel sheet may be a carbon steel containing a certain amount of carbon (C), manganese (Mn), silicon (Si), phosphorus (P), sulfur (S), etc., and since such carbon steel is widely known in the art, a composition of alloying elements is not specifically limited.

In an embodiment of the present disclosure, the zinc-based plating layer may be included on at least one surface of the base steel sheet. The zinc-based plating layer may be a layer containing zinc (Zn) as a main component, for example, a plating layer containing Zn in an amount of 50 wt% or more. In addition, the plating layer may be a zinc-based alloy plating layer containing one or more elements such as aluminum (Al), magnesium (Mg), and silicon (Si) in addition to zinc (Zn). The plating layer may be provided on both surfaces of the base steel sheet as well as on one surface.

In an embodiment of the present disclosure, the type of zinc-based plated steel sheet including the zinc-based plating layer on at least one surface of the base steel sheet is not specifically limited. However, as a non-limiting example, it may be a hot-dip galvanized steel sheet manufactured by hot-dip galvanizing, an alloyed hot-dip galvanized steel sheet, an electro-galvanized steel sheet manufactured by electro-galvanizing, or a zinc-based electroalloy plated steel sheet.

In addition, in another embodiment of the present disclosure, the aluminum-based plating layer may be included on at least one surface of the base steel sheet. It should be noted that the base steel sheet in this case is distinct from the base steel sheet on which the above-described zinc-based plating layer is formed. In other words, it does not mean that the base steel sheet includes the zinc-based plating layer on one surface and the aluminum-based plating layer on the other surface.

In an embodiment of the present disclosure, the aluminum-based plating layer may be the plating layer containing aluminum (Al) as a main element. As an example, the aluminum-based plating layer may contain, in wt%, zinc (Zn): 0 to 27%, silicon (Si): 7.0 to 10.0%, the balance being aluminum (Al) and unavoidable impurities. The plating layer may also be provided on both surfaces of the base steel sheet as well as on one surface.

In an example embodiment of the present disclosure, the aluminum-based plating layer may be formed by immersing the base steel sheet in an hot-dip aluminum-based plating bath, as will be described in detail later, and it is well known that the composition of the aluminum-based plating layer is determined according to the composition of the hot-dip aluminum-based plating bath.

In an embodiment of the present disclosure, among the alloy compositions constituting the aluminum-based plating layer, zinc (Zn) is an element advantageous for securing the corrosion resistance of the plating layer, and a sacrificial cathodic protection effect by Zn may be obtained. As an example, when the content of Zn exceeds 27%, there is a problem in that Zn diffuses into the interior of the base steel sheet during the hot press-forming of the base steel sheet on which the plating layer is formed, thereby causing cracks due to LME. Therefore, it should be noted that Zn may be included in an amount of up to 27%, and that even when it is 0%, there is no problem in securing the physical properties of the aluminum-based plating layer.

In an embodiment of the present disclosure, silicon (Si) among the alloy composition constituting the aluminum-based plating layer may play a role in suppressing the diffusion of Al present in the plating bath into the interior of the base steel sheet during plating of the base steel sheet. As an example, to obtain the above-described effect, the content of Si may be 7% or more. On the other hand, when the content exceeds 10%, there is a concern that the melting point of the plating bath will rise sharply, and in this case, there is a problem in that the amount of ash generated in the plating bath increases rapidly.

In an embodiment of the present disclosure, the surface-treated film layer may be included on the zinc-based plating layer. That is, a coating layer having a certain thickness may be formed on the zinc-based plating layer.

In addition, in an embodiment of the present disclosure, the surface-treated film layer may be included on the aluminum-based plating layer, and the film layer may also have a certain thickness.

In an embodiment of the present disclosure, the surface-treated film layer provided on the zinc-based plating layer or the aluminum-based plating layer may be formed from the composition for a surface treating steel sheet according to an embodiment of the present disclosure. That is, the film layer formed from the composition according to an embodiment of the present disclosure includes the inorganic compound and the organic compound.

As a result, the surface-treated plated steel sheet may have intended physical properties. In particular, the zinc-based plated steel sheet may achieve the effect of significantly improving lubricity, and the aluminum-based plated steel sheet, which is an example of the plated steel sheet for hot press-forming, may not only shorten the heating time during high-temperature heating for hot press-forming but also improve bendability and hydrogen embrittlement resistance (hydrogen absorption).

In an embodiment of the present disclosure, the surface-treated film layer may be composed of two layers, an upper layer and a lower layer. That is, the film layer formed from the composition for surface treatment according to an embodiment of the present disclosure has a content distribution of the organic compounds in a depth direction, and a carbon (C) distribution of the upper and lower layers may satisfy the following Equation 1. [Relational Equation 1] 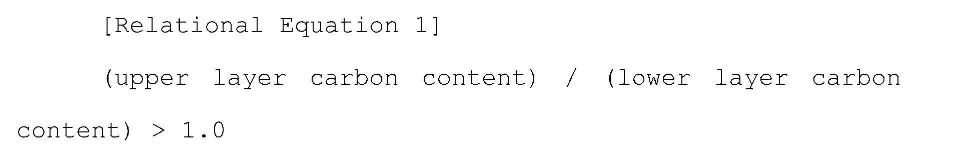 (upper layer carbon content) / (lower layer carbon content) > 1.0

As described above, the surface-treated film layer according to an embodiment of the present disclosure is formed from the composition composed of the inorganic compound and the organic compound, in which the inorganic compound is composed of metals such as P, B, and Zr, and the organic compound may include the fatty acid-based organic compounds, and the types thereof may be substituted with the above-described contents.

As one example, when the composition according to an embodiment of the present disclosure is coated (applied) to the surface of the plating layer of the zinc-based plated steel sheet, the plating components (e.g., Zn, etc.) within the plating layer are etched and oxidized by an etching action, and the inorganic compound within the composition is precipitated on an surface (interface) of the plating layer to form a film. Meanwhile, since the organic compounds contained in the above composition do not react with the plating layer, they are mainly distributed on an upper surface of the surface-treated film layer rather than at the interface adjacent to the plating layer. As a result, the surface-treated film layer formed on the plating layer according to an embodiment of the present disclosure may be composed of a lower layer in which in the inorganic compounds are mainly present near the interface of the plating layer and relatively few the organic compounds, and an upper layer composed of a relatively large amount of the organic compounds compared to the lower layer. Such a structure of the upper and lower layers may appear not only in the zinc-based plated steel sheet but also in the aluminum-based plated steel sheet that is the plated steel sheet for hot press-forming.

In particular, since the composition according to an embodiment of the present disclosure includes the fatty acid-based organic compounds, etc., as the organic compounds, the carbon distribution of the upper and lower layers of the surface-treated film layer may satisfy Relational Equation 1. Consequently, the lubrication properties of the surface-treated zinc-based and the aluminum-based plated steel sheets may be improved.

In an embodiment of the present disclosure, a case deviating from the above Relational Equation 1 may correspond to a case where the organic compounds are not mainly distributed within the upper layer of the surface-treated film layer. In this case, the lubricity of the plated steel sheet is reduced compared to the case satisfying Relational Equation 1 under the conditions where the same amount of the organic compounds is added. Furthermore, due to the large amount of organic compounds present in the lower layer, the adhesion at the interface between the surface-treated film layer and the plating layer is reduced, which may cause other problems such as reduced sealant adhesion.

In an embodiment of the present disclosure, the carbon distribution of the surface-treated film layer in the thickness (depth) direction may be confirmed by measuring the carbon content of the upper and lower layers constituting the film layer using a glow discharge spectrometer (GDS) or by measuring the cross-section of the film layer in the thickness direction using an energy dispersive spectrometer (EDS, e.g., SEM-EDS equipment).

According to an embodiment of the present disclosure, the surface-treated film layer may have a thickness of 0.1 to 1.0 µm. In this case, the thickness is based on the thickness after drying. When the thickness of the film layer is less than 0.1 µm, there is a problem in that the lubricity, corrosion resistance, bendability, and hydrogen embrittlement resistance are inferior as the solution composition is thinly applied to the rough peak areas present on the surface of the plating layer of the plated steel sheet. On the other hand, when the thickness of the film layer exceeds 1.0 µm, the film layer is formed to be excessively thick, whereby the sealer adhesion and the like are deteriorated, and the processing cost of the solution composition increases, making it economically disadvantageous.

Meanwhile, in an embodiment of the present disclosure, the surface-treated film layer having an upper and lower layer structure may be divided into the upper layer extending from an outermost surface to the region in which the value of Equation 1 in the thickness (depth) direction exceeds 1.0, and the lower layer extending therefrom. In other words, based on the value of Relational Equation 1, the area from the point where the value becomes 1.0 or less to the surface (interface) in contact with the plating layer may be considered the lower layer.

Hereinafter, a method for manufacturing a zinc-based plated steel sheet, i.e., a surface-treated zinc-based plated steel sheet, according to another aspect of the present disclosure will be described.

In addition, a method for manufacturing a plated steel sheet for hot press-forming, i.e., a surface-treated plated steel sheet for hot press-forming, according to another aspect of the present disclosure will be described.

However, it should be noted that each of the following manufacturing methods corresponds to one example for manufacturing the surface-treated zinc-based plated steel sheet and the surface-treated plated steel sheet for hot press-forming.

First, in an embodiment of the present disclosure, the surface-treated zinc-based plated steel sheet may be manufactured by the operations of: preparing the plated steel sheet having the zinc-based plating layer formed on at least one surface of a base steel sheet; coating the composition for surface treatment onto the zinc-based plating layer of the plated steel sheet; and drying the plated steel sheet after coating.

In an embodiment of the present disclosure, the surface-treated aluminum-based plated steel sheet may be manufactured by the operations of: preparing the plated steel sheet having the aluminum-based plating layer formed on at least one surface of the base steel sheet; applying the composition for surface treatment onto the aluminum-based plating layer of the plated steel sheet; and drying and curing the plated steel sheet after applying the composition to form the surface-treated film layer.

In an embodiment of the present disclosure, any steel sheet capable of manufacturing the plated steel sheet by plating may be applied as the base steel sheet for forming the zinc-based plating layer or the aluminum-based plating layer on at least one surface, so the type thereof is not specifically limited. In addition, it may be replaced with the description of the base steel sheet described above.

In an embodiment of the present disclosure, the zinc-based plating layer is the plating layer comprising zinc (Zn) as a main component, and does not exclude the addition of elements other than zinc. As one example, the elements other than zinc may be one or more selected from aluminum (Al), magnesium (Al), and silicon (Si), and the plating layer including a mixture of these elements and zinc may be referred to as the zinc-based alloy plating layer. Furthermore, the content of the zinc-based plating layer described above may be substituted.

In an embodiment of the present disclosure, the aluminum-based plating layer may be formed by plating the base steel sheet, and as one example, it may be obtained through a process of immersing the base steel sheet in the aluminum-based plating bath containing unavoidable impurities including Si, Zn, and Fe in addition to Al. As a non-limiting example, the aluminum-based plating bath may contain silicon (Si) in an amount of 7.0 to 10.0%, and by adding the Si, the effect of suppressing the fluidity of the molten metal and the diffusion of Al into the base steel sheet during plating may be obtained. In addition, the aluminum-based plating bath may further contain zinc (Zn) in an amount of 0 to 27% and iron (Fe) in an amount of 3% or less, and it should be noted that descriptions thereof are replaced by the foregoing description.

In an embodiment of the present disclosure, the surface treatment of the composition for surface treatment may be performed by a solution application method in which the composition is simply applied to the surface and then dried, regardless of the type of plating layer. For example, any one coating method selected from the group consisting of bar coating, roll coating, spraying, dipping, spray squeezing, and dipping squeezing may be used. When such a coating method is used, the process is simple and the process operation cost is low, so an economic effect may be obtained.

In an embodiment of the present disclosure, the composition for surface treatment coated on the zinc-based plating layer or the aluminum-based plating layer may be the composition for a surface treating steel sheet according to an embodiment of the present disclosure. In this case, the composition may be a solution composition, and as one example, the solution composition may be the composition for surface treatment having 8 to 15 wt% based on solid content containing water as a solvent. Here, water may be deionized water or distilled water.

In coating the above-described solution composition, as one example, it may be performed with an adhesion amount of 100 to 1000 mg/m². When the amount of the solution composition coated is less than 100 mg/m², a problem may arise where lubricity is reduced because the composition is applied thinly to peak areas of the plating layer. On the other hand, when the adhesion amount of the solution composition exceeds 1000 mg/m², the surface-treated film layer after drying becomes too thick, and the physical properties such as sealant adhesion may deteriorate. More advantageously, the solution composition may be applied with an adhesion amount of 150 to 500 mg/m².

In an embodiment of the present disclosure, the operation of drying the plated steel sheet coated with the composition for surface treatment may be performed in a temperature range of 70 to 150°C. When the drying temperature is below 70°C, the drying may not be fully completed, and the physical properties of the surface-treated plated steel sheet, such as corrosion resistance, film adhesion, and lubricity, may be inferior. On the other hand, when the drying temperature exceeds 150°C, the ratio of hydroxide to oxide of in the inorganic compounds in the composition decreases, which may lead to a decrease in lubricity, sealant adhesion, film removal properties, and phosphate treatment properties.

By doing so, the plated steel sheet having the surface-treated film layer formed thereon may be obtained. In this case, the plated steel sheet may be the zinc-based plated steel sheet, as well as the aluminum-based plated steel sheet suitable for the plated steel sheet for hot press-forming. In this case, the surface-treated film layer may be formed by a composition containing an inorganic compound and an organic compound, and the surface-treated film layer having a structure in which the organic compound has a content distribution in the thickness (depth) direction may be obtained.

Meanwhile, the surface-treated film layer having a content distribution in the thickness (depth) direction may be formed by chemical reactions occurring during the coating and drying process of a solution composition containing both the inorganic compound and the organic compound.

However, it should be noted that, in obtaining such a surface-treated film layer, a method in which a solution composition containing an inorganic compound is primarily coated and dried, and then a solution composition containing an organic compound is secondarily coated and dried, is not excluded.

### Mode for Invention

Hereinafter, the present disclosure will be described in more detail with reference to Examples. However, the description of these Examples is provided only for illustrating the implementation of the present disclosure, and is not limited the present disclosure. This is because the scope of the present disclosure is determined by the matters described in the claims and the matters reasonably inferred therefrom.

### (Example)

### Experimental Example 1. Surface-treated zinc-based plated steel sheet

An alloyed hot-dip galvanized steel sheet (GA), which includes a zinc-based plating layer and has a thickness of 0.8 mm, an elongation of 36 to 37%, and a plating weight of 45 g/m², was prepared. Thereafter, a composition for surface treatment in a solution state was coated (applied) onto a plating layer of the alloyed hot-dip galvanized steel sheet.

The composition for surface treatment in a solution state includes boric acid (B) and ammonium molybdate (Mo) as inorganic compounds, and includes organic compounds as shown in Table 1 below. In this case, each composition was prepared such that the content of the organic compounds within the film layer formed by subsequent drying had the content shown in Table 1. For example, when the content of the organic compounds within the film layer was 20 wt%, the composition was prepared such that, in a solution composition having a solid content of 10 wt%, the inorganic compounds were 9 wt% and the organic compounds were 1 wt%. Water (distilled water) was used as a solvent.

Each composition for surface treatment in a solution state was coated (applied) onto the plating layer using a bar-coating method so that the adhesion amount of the film layer after drying became 400 mg/m², and then dried at 90°C, thereby obtaining the alloyed hot-dip galvanized steel sheets each having surface-treated film layers formed thereon.

Meanwhile, for some alloyed hot-dip galvanized steel sheets, inorganic compound solutions and organic compound solutions were each prepared. One of the two solutions was primarily coated, and then the other solution was secondarily coated, thereby forming the surface treatment film layer.

A friction test and a sealer adhesion evaluation were performed on the alloyed hot-dip galvanized steel sheets each having surface-treated film layer formed thereon, and the results are shown in Table 1 below.

The friction test was evaluated using a pin-on-disk method. A steel ball having a diameter of 3 mm was used as a fixed pin, and frictional force (mN) was measured under conditions of a load of 50 g, a rotation radius of 10 mm, and a linear speed of 20 mm/s. In this case, an average value was taken over a measurement range from 5 to 100 seconds. As a result, it means that the lower the friction, the better the lubricity (frictional properties).

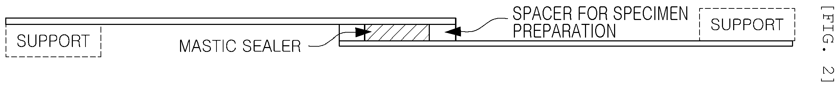

The sealer adhesion evaluation was performed by manufacturing two specimens each having a size of 25 × 100 mm and applying a mastic sealer (adhesion strength spec: 4.0 kgf/cm²) adhesive having a size of 25 mm (width) × 25 mm (length) × 3 mm (height), located 10 mm inward from an end of one specimen. Thereafter, the other specimen was stacked as illustrated in FIG. 2 and baked at 170°C for 20 minutes, and then the adhesive shear strength between the upper and lower specimens was measured. In this case, the shear strength was measured at a speed of 50 mm/min, and the adhesive strength (kgf/cm²) was expressed as a value obtained by dividing the maximum shear force by the adhesive area of 6.25 cm².

Meanwhile, to confirm the carbon distribution of the surface-treated film layer in the thickness direction, the carbon contents of the upper and lower layers constituting the surface-treated film layer were measured using SEM-EDS surface analysis. Thereafter, the carbon distribution was calculated based on Relational Equation 1. In this case, the carbon content (wt%) obtained by the surface analysis from an outermost surface of the surface-treated film layer to a point corresponding to t/2 (where t corresponds to the thickness of the film layer) in the thickness direction was defined as the carbon content of the upper layer, and the carbon content (wt%) obtained by the surface analysis from the point t/2 to the interface between the film layer and the plating layer was set as the carbon content of the lower layer.

**[Table 1]**

| Division | Type of organic compounds | Content of organic compounds in film layer | | Properties of film layer | |
|---|---|---|---|---|---|
| | | Content (wt%) | Carbon distribution (Relational Equation 1) | Fricti onal force (mN) | Adhesive strength (kgf/cm² ) |
| Comparative Example 1 | - (Uncoated) | - | - | 58.5 | 5.3 |
| Comparative Example 2 | - (No organic compound added) | 0 | 0 | 41.6 | 5.5 |
| Comparative Example 3 | Sodium stearate | 60 | 1.3 | 17.3 | 3.5 |
| Comparative Example 4 | Sodium stearate | 70 | 1.5 | 17.1 | 2.6 |
| Comparative Example 5 | 12-Hydroxy stearic acid | 70 | 1.4 | 19.8 | 3.3 |
| Comparative Example 6 | Polyoxyethylene(2) stearyl ether | 55 | 1.4 | 15.3 | 2.2 |
| Comparative Example 7 | 12-Hydroxy stearic acid* | 20 | 0.02 | 20.9 | 3.0 |
| Comparative Example 8 | Sodium stearate | 1 | 1.5 | 40.0 | 5.6 |
| Comparative Example 9 | 12-Hydroxy stearic acid | 1 | 1.2 | 38.7 | 5.7 |
| Inventive Example 1 | Sodium stearate | 2 | 1.5 | 25.4 | 5.0 |
| Inventive Example 2 | Sodium stearate | 20 | 1.3 | 19.2 | 5.3 |
| Inventive Example 3 | Sodium stearate | 50 | 1.6 | 19.1 | 4.4 |
| Inventive Example 4 | Stearic acid | 10 | 1.5 | 19.8 | 5.1 |
| Inventive Example 5 | 12-Hydroxy stearic acid | 2 | 1.3 | 28.8 | 5.7 |
| Inventive Example 6 | 12-Hydroxy stearic acid | 50 | 1.3 | 21.6 | 4.5 |
| Inventive Example 7 | 12-Hydroxy stearic acid** | 20 | 77.0 | 20.2 | 4.7 |
| Inventive Example 8 | Stearamide | 5 | 1.9 | 20.0 | 5.7 |
| Inventive Example 9 | Adipic acid | 20 | 1.3 | 25.5 | 5.2 |
| Inventive Example 10 | Sebacic acid | 30 | 1.4 | 25.3 | 5.0 |
| Inventive Example 11 | Sebacic acid | 40 | 1.4 | 21.5 | 4.5 |
| Inventive Example 12 | Sebacic acid | 50 | 1.3 | 21.4 | 4.7 |
| Inventive Example 13 | Sebacic acid** | 20 | 53.0 | 20.4 | 4.3 |
| Inventive Example 14 | Polyoxyethylene(2) stearyl ether | 10 | 1.2 | 16.5 | 4.6 |
| Inventive Example 15 | Polyoxyethylene(2) stearyl ether | 40 | 1.3 | 16.5 | 4.0 |
| The remainder, excluding the content of organic compounds in the film layer, is inorganic compounds. | | | | | |
| *Comparative Example 7 is an example of sequential coating, and is an example in which an organic compound solution is primarily coated, and then an inorganic compound solution is secondarily coated. | | | | | |
| **Inventive Examples 7 and 13 are also examples of sequential coating, and correspond to an example in which an inorganic compound solution is primarily coated, and then an organic compound solution is secondarily coated. | | | | | |

As shown in Table 1, it could be confirmed that Comparative Example 1, in which surface treatment was not performed, and Comparative Example 2, which was surface-treated with a composition composed only of inorganic compounds even if surface treatment is performed, exhibited lubricity that was relatively significantly inferior with a frictional force of 40 mN or more.

On the other hand, it could be confirmed that Inventive Examples 1 to 15, which surface treatment is performed using a composition containing a certain amount of fatty acid-based organic compounds together with inorganic compounds, have significantly lower frictional force compared to Comparative Examples 1 and 2. This is considered to be due to the fact that the fatty acid-based organic compounds are contained in the surface-treated film layer, so that the film layer is formed into a structure having a distribution of organic compound content in the thickness (depth) direction, thereby exhibiting the carbon distribution that satisfies Relational Equation 1.

Meanwhile, Comparative Examples 3 to 6, although the organic compounds are included in the composition for surface treatment, have an excessive content thereof, and satisfy the carbon distribution of Relational Equation 1, whereas the adhesive strength was inferior due to the excessive amount of fatty acid-based organic compounds.

In addition, in Comparative Examples 8 and 9, in which the content of organic compounds in the composition is insufficient, the adhesive strength was excellent due to the relatively high content of inorganic compounds; however, the frictional force increased, resulting in deterioration of lubricity.

Meanwhile, Comparative Example 7 is a case in which the carbon distribution within the surface-treated film layer is excessively higher in the lower layer than in the upper layer, and it can be seen that when organic compounds are excessively present in the lower layer of the film layer in this manner, the adhesion between the film layer and the base steel sheet is reduced, thereby causing a problem in sealant adhesion.

In contrast, Inventive Examples 7 and 13 are cases in which the carbon distribution within the surface-treated film layer is excessively lower in the lower layer than in the upper layer, and it can be confirmed that lubricity is excellent, which is due to the organic compounds present in large amount in the upper layer. In addition, the favorable adhesive strength properties are considered to be due to the fact that the organic compounds in the upper layer of the film layer melt at the sealant baking temperature, become fluid while being molten, and are absorbed into the sealant.

### Experimental Example 2. Surface-treated aluminum-based plated steel sheet

The aluminum-based plated steel sheet was prepared, in which the aluminum-based plating layer composed of, by wt%, 9 % silicon, the balance being Al, and unavoidable impurities was formed on both sides of the base steel sheet. Thereafter, the composition for surface treatment in a solution state was coated (applied) onto the plating layer of the aluminum-based plated steel sheet. In this case, as the composition for surface treatment in a solution state, the same composition as that used in Experimental Example 1 was used.

Each composition for surface treatment in a solution state was coated (applied) onto the plating layer using a bar-coating method so that the adhesion amount of the film layer after drying became 400 mg/m², and then dried at 90°C, thereby obtaining the aluminum-based plated steel sheets each having surface-treated film layers formed thereon.

Subsequently, each aluminum-based plated steel sheet having a film layer formed on the plating layer according to the above was heated to 900°C and held for 5 minutes for heat treatment, and was then press-formed using a die while being simultaneously cooled, thereby obtaining the hot press-formed member. Thereafter, the corrosion resistance, bendability, and hydrogen adsorption amount of the hot press-formed member were measured, and the results were shown in Table 2 below.

The corrosion resistance was evaluated based on ISO 14993:2018, and was also assessed based on the relative red rust formation area compared to that of the untreated aluminum-based plated steel sheet.

The bendability (C-direction and L-direction) was measured by performing a three-point bending test (VDA 238-100) five times in each direction, and was expressed as the average value of the bending angle converted from the maximum bending load.

The diffusible hydrogen content was evaluated by quantifying the amount of hydrogen released while heating the specimen from room temperature to 400°C using Bruker's G8 GALILEO instrument. Considering that the hydrogen included in the member is naturally released to the outside over time, specimens that had elapsed the same time of time after manufacturing the member were used for hydrogen measurement.

Meanwhile, even if the above-described physical properties are excellent, there is difficulty in practical application when film is detached during handling processes such as the manufacturing of the steel sheet in a coil state, transportation, and blanking to contaminate equipment. Accordingly, prior to the hot press-forming, a taping test was conducted by attaching and then removing a strong adhesive tape to and from the surface of a plated steel sheet specimen, and specimens exhibiting an increase in tape weight were identified as those expected to cause equipment contamination. These results were also shown in Table 2 below.

In addition, the time required to reach the target heating temperature was measured. Specifically, the time required for heating was expressed as a value converted into a relative reduction rate (%) based on the time it takes to heat an untreated aluminum-based plated steel sheet to the target temperature.

**[Table 2]**

| Division | Type of organic compounds | Target temperature reduction rate | Equipment contamination status | Corrosion resistance | Bendability, | Hydrogen adsorption amount |
|---|---|---|---|---|---|---|
| Comparative Example a | - (Uncoated) | - | - | × | 60 | 0.234 |
| Comparative Example b | - (No organic compound added) | 3 | - | × | 60 | 0.292 |
| Comparative Example c | Sodium stearate | 35 | ○ | ○ | 66 | 0.125 |
| Comparative Example d | Sodium stearate | 40 | ○ | ○ | 67 | 0.099 |
| Comparative Example e | 12-Hydroxy stearic acid | 40 | ○ | ○ | 67 | 0.144 |
| Comparative Example f | Polyoxyethylene(2 ) stearyl ether | 33 | ○ | ○ | 65 | 0.187 |
| Comparative Example g | 12-Hydroxy stearic acid* | 16 | ○ | ○ | 62 | 0.197 |
| Comparative Example h | Sodium stearate | 6 | - | × | 60 | 0.250 |
| Comparative Example i | 12-Hydroxy stearic acid | 6 | - | × | 60 | 0.248 |
| Inventive Example a | Sodium stearate | 7 | - | △ | 61 | 0.209 |
| Inventive Example b | Sodium stearate | 16 | - | ○ | 62 | 0.176 |
| Inventive Example c | Sodium stearate | 30 | - | ○ | 65 | 0.167 |
| Inventive Example d | Stearic acid | 11 | - | ○ | 61 | 0.195 |
| Inventive Example e | 12-Hydroxy stearic acid | 7 | - | △ | 61 | 0.201 |
| Inventive Example f | 12-Hydroxy stearic acid | 30 | - | ○ | 65 | 0.156 |
| Inventive Example g | 12-Hydroxy stearic acid** | 16 | - | ○ | 62 | 0.172 |
| Inventive Example h | Stearamide | 8 | - | △ | 61 | 0.197 |
| Inventive Example i | Adipic acid | 16 | - | ○ | 62 | 0.196 |
| Inventive Example j | Sebacic acid | 21 | - | ○ | 63 | 0.179 |
| Inventive Example k | Sebacic acid | 26 | - | ○ | 64 | 0.163 |
| Inventive Example l | Sebacic acid | 30 | - | ○ | 65 | 0.149 |
| Inventive Example m | Sebacic acid** | 16 | - | ○ | 62 | 0.196 |
| Inventive Example n | Polyoxyethylene(2 ) stearyl ether | 11 | - | △ | 63 | 0.214 |
| Inventive Example o | Polyoxyethylene(2 ) stearyl ether | 26 | - | ○ | 65 | 0.163 |
| The content of each organic compound was set to be the same as in Table 1, and the remainder excluding the organic compounds are inorganic compounds (in this case, the content of each compound is based on the content within the film layer on the plating layer of the plated steel sheet prior to the hot press-forming). | | | | | | |
| *Comparative Example g is an example of sequential coating, and is an example in which an organic compound solution is primarily coated, and then an inorganic compound solution is secondarily coated. | | | | | | |
| **Inventive Examples g and m are also examples of sequential coating, and correspond to an example in which an inorganic compound solution is primarily coated, and then an organic compound solution is secondarily coated. | | | | | | |

As shown in Table 2, it could be confirmed that the physical properties of corrosion resistance, bendability, and hydrogen absorption are all improved in the hot press-formed members (Inventive Examples a to o) obtained by hot press-forming the surface-treated aluminum-plated steel sheet using the composition for surface treatment according to an embodiment of the present disclosure, compared to the hot press-formed member without surface treatment (Comparative Example a).

In particular, it could be confirmed that the heating time may be significantly reduced compared to Comparative Example a when heating to a high temperature for hot press-forming the surface-treated aluminum-plated steel sheet. These results suggest that the efficiency of the hot press-forming process may be increased and that energy costs may be reduced when manufacturing parts, etc., by the hot press-forming.

Meanwhile, Comparative Examples c to f, in which the organic compounds are included in the composition for surface treatment but the content thereof is excessive, and Comparative Example g, in which the carbon distribution within the film layer is excessively high in the lower layer compared to the upper layer, were determined to be difficult to apply to actual products because the equipment contamination is expected during the handling process of the material. In addition, in the case of Comparative Examples h and i, where the content of the organic compounds in the composition was insufficient, the corrosion resistance was inferior, and the hydrogen absorption capacity was not improved.

### [Description of Reference Characters]

1...Base Steel Sheet
2...Zinc-Based Plating Layer or Aluminum-Based Plating Layer
3...Surface-Treated Film Layer
4...Lower Layer
5...Upper Layer

## Claims

1. A composition for a surface treating steel sheet, comprising:
an inorganic compound, an organic compound, and the balance being a solvent,
wherein the organic compound is a fatty acid-based organic compound or a dicarboxylic acid-based organic compound having a molecular weight of 1,000 or less.

2. The composition of claim 1, wherein the organic compound is included in an amount of 0.15 to 7.50% based on 100 wt% of a total composition.

3. The composition of claim 1, wherein the organic compound is one or more selected from the group consisting of stearic acid, 12-hydroxy stearic acid, 12-oxo stearic acid, palmitic acid, oleic acid, sodium stearate, sodium laurate, sodium oleate, stearoamide, adipic acid, pimelic acid, suberic acid, azelaic acid, sebacic acid, undecanedioic acid, dodecanedioic acid, disodium adipate, diammonium adipate, disodium decanedioate, diammonium decanedioate, ether of fatty acid and polyoxyethylene(n), ester of fatty acid and polyoxyethylene(n), and fatty acid ester.

4. The composition of claim 1, wherein the inorganic compound is one or more selected from the group consisting of phosphorus (P), boron (B), and zirconium (Zr).

5. The composition of claim 4, wherein the inorganic compound further includes one or more selected from the group consisting of nickel (Ni), manganese (Mn), molybdenum (Mo), zinc (Zn), and silicon (Si).

6. A surface-treated plated steel sheet, comprising:
a base steel sheet;
a plating layer formed on at least one surface of the base steel sheet; and
a surface-treated film layer formed on the plating layer,
wherein the surface-treated film layer is formed of the composition for surface treatment of any one of claims 1 to 5.

7. The surface-treated plated steel sheet of claim 6, wherein the surface-treated film layer includes an organic compound in an amount of 2 to 50% based on 100wt% in total.

8. The surface-treated plated steel sheet of claim 6, wherein the surface-treated film layer is composed of two layers, an upper layer and a lower layer, and
a carbon (C) distribution of the upper layer and the lower layer satisfies the following Relational Equation 1. [Relational Equation 1] 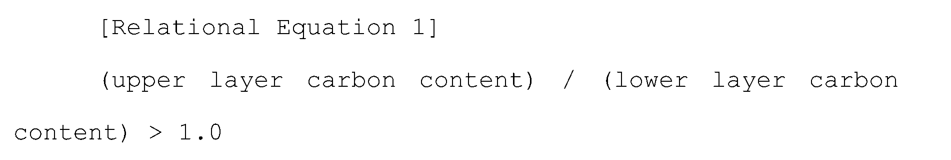 (upper layer carbon content) / (lower layer carbon content) > 1.0

9. The surface-treated plated steel sheet of claim 6, wherein the surface-treated film layer has a thickness of 0.1 to 1.0 µm.

10. The surface-treated plated steel sheet of claim 6, wherein the plating layer is a zinc-based plating layer or an aluminum-based plating layer.

11. A manufacturing method for a surface-treated plated steel sheet, comprising:
preparing a plated steel sheet having a plating layer formed on at least one surface of a base steel sheet;
coating a composition for surface treatment on the plating layer; and
drying the plated steel sheet coated with the composition for surface treatment to form a surface-treated film layer,
wherein the composition for surface treatment is the composition of any one of claims 1 to 5.

12. The manufacturing method of claim 11, wherein the coating of the composition for surface treatment is performed at an adhesion amount of 100 to 1000 mg/m².

13. The manufacturing method of claim 11, wherein the coating operation is performed by any one method selected from the group consisting of bar coating, roll coating, spraying, immersion, spray squeezing, and immersion squeezing.

14. The manufacturing method of claim 11, wherein the drying operation is performed in a temperature range of 70 to 150°C based on a PMT of the plated steel sheet.

15. The manufacturing method of claim 11, wherein the plating layer is a zinc-based plating layer or an aluminum-based plating layer.

16. A hot press-formed member, comprising:
a base steel sheet;
an aluminum-based plating layer formed on at least one surface of the base steel sheet; and
a surface-treated film layer formed on the aluminum-based plating layer,
wherein the film layer is formed of the composition of any one of claims 1 to 5.
